# EUROPEAN PATENT SPECIFICATION

(11) **EP 2 078 161 B1**
(45) Date of publication and mention of the grant of the patent: **01.01.2014**
(21) Application number: 07817868.8
(22) Date of filing: 02.11.2007
(51) Int. Cl.: F03D 9/00, F03D 11/00

(54) **A WIND ENERGY CONVERTER, A METHOD AND USE HEREOF**
WINDENERGIEWANDLER, VERFAHREN UND VERWENDUNG DAFÜR
CONVERTISSEUR D'ÉNERGIE ÉOLIENNE, PROCÉDÉ ASSOCIÉ ET UTILISATION DE CE PROCÉDÉ

(30) Priority: 03.11.2006 DK 200601431
(43) Date of publication of application: 15.07.2009
(73) Proprietor: Vestas Wind Systems A/S, 8200 Aarhus N (DK)
(72) Inventor: LARSEN, Gerner, 8382 Hinnerup (DK); HENRIKSEN, Niels Martin, 8330 Beder (DK); CHRISTENSEN, Jan Bjerre, 8382 Hinnerup (DK); JENSEN, Søren P., 6800 Varde (DK)
(74) Representative: Inspicos A/S
(86) International application number: PCT/DK2007/000472
(87) International publication number: WO 2008/052557

(56) References cited:
- WO-A-00/68570
- WO-A-01/77526
- WO-A-2007/110718
- DE-A1- 10 352 023
- DE-A1-102004 061 391
- US-B1- 6 676 122

## Description

### Background of the invention

The invention relates to a wind energy converter according to the preamble of claim 1, a method for controlling the temperature of one or more areas of a wind energy converter and use hereof.

### Description of the Related Art

A modern wind energy converter known in the art comprises a wind turbine placed on and rigidly connected to a foundation. The wind turbine comprises a tower and a wind turbine nacelle positioned on top of the tower. A wind turbine rotor, comprising one or more wind turbine blades, is connected to the nacelle through a low speed shaft, which extends out of the nacelle front.

Controlling the temperature of electrical and mechanical components - particularly during operation of the components - has always been a problem and especially within the art of wind energy converters, this problem has been profound. Often the same wind energy converter type has to be able to operate in both extremely hot and extremely cold areas of the globe, which makes heavy demands on the wind energy converters system for controlling the temperature of especially wind turbine components such as gear, generator, power handling equipment, bearings and other.

Even though modern wind turbines often become more and more efficient in converting the rotation of the wind turbine rotor to power, the process will always result in some of the energy being converted to heat in some of the wind turbine components.

This excess heat must be removed from the components to protect the components and for them to function properly. Traditionally this has been done by means of one or more cooling systems, which by means of a cooling medium can transport the heat from the components to a radiator, which can give off the heat to the air outside the wind turbine and/or by creating an air flow of air from the outside of the wind turbine which passes the components.

But the quality of the outside air is difficult to control both in temperature, humidity, purity and other. Furthermore, modern wind turbines get bigger and bigger in power output and thereby often also in production of excess heat and this matched with the fact that air is a relatively poor conductor of heat, make these types of cooling systems very large, expensive and heavy.

Even further, the fact that the temperature of the air outside the wind turbine varies a lot from site to site, from day to night and from season to season - in extreme cases from -30° to +50° Celsius - will in some cases result in wind energy converters with an over-dimensioned and expensive cooling system. This problem could of course be overcome by adapting the temperature control system of the wind energy converter to the specific erection site, but this would be logistically difficult, expensive and prolong the time of delivery of the wind energy converters.

Another way of controlling the temperature of wind turbine components is disclosed in American patent No US 6,676,122 B1, where the cooling system cools the components in the nacelle and the tower by circulating air inside the tower and the nacelle, making it give off heat through the surface of the tower and nacelle. But such a system is both complex and difficult to implement and since wind energy converters usually produce the majority of the power during the day (because of more wind during the day), it usually also needs the most cooling during the day, where the sun and the ambient temperature will heat up the surface of the wind turbine. Such a system will therefore have to have a very large cooling capacity to be able to work properly, making the system itself very large and expensive.

Regarding offshore wind energy converters it is known to use seawater to cool different components of the wind turbine, but if the cooling system is open there are serious problems regarding ice, clogging, corrosion and other, which are difficult and expensive to solved, and if the system is closed e.g. by circulating a cooling medium through a hose placed in the seawater there is ice, storm, overgrowing and other to be solved. The problems of both these systems being complicated and expensive to overcome and no matter how it is done, this technique is only feasible in relation to offshore wind energy converters.

Another way of controlling the temperature in a wind turbine is disclosed in DE 10 2004 061 391 A1 where air is being drawn through cable canals in the wind turbine foundation to lower the temperature of the air before it is used to cool equipment in the tower of a wind turbine. But this cooling system is not very efficient and is contains several of the previously mentioned drawbacks such as difficulties in controlling the quality and other.

It is therefore an object of the invention to provide for a wind energy converter without the above mentioned disadvantages.

Especially it is an object of the invention to provide for an advantageous and cost-efficient technique for controlling the temperature of one or more areas of a wind energy converter, particularly regarding where and how to give off excess heat and/or absorb needed heat.

### The invention

The invention provides for a wind energy converter comprising a wind turbine, a wind turbine foundation and temperature control means for controlling the temperature of one or more areas of the wind turbine. The temperature control means including means for exchanging heat. The wind energy converter is characterized in that the means for exchanging heat is positioned in the ground outside the foundation.

The temperature of the ground surrounding the foundation will vary within a relatively little range and at a certain depth the temperature is substantially constant all over the globe. It is therefore advantageous to integrate the means for exchanging heat in the ground outside the foundation, in that this environment is more predictable and constant.

In an aspect of the invention, said temperature control means comprising a cooling fluid for transporting heat to or from said one or more areas of said wind turbine, one or more pumps for creating a flow of said cooling fluid and one or more heat sinks for giving off heat from or supplying heat to said cooling fluid.

By creating a flow of cooling fluids to or form the areas of the wind turbine that needs heating or cooling is an efficient way of transporting heat in a temperature control system, particularly over large distances as in a wind energy converter.

It should be emphasised that by the term "heat sink" is to be understood any kind of structure or device that absorbs or dissipates heat.

In an aspect of the invention, said means for exchanging heat is a heat sink of said temperature control means.

By making the means for exchanging heat a heat sink of the temperature control means the part of the temperature control means placed in the ground surrounding the wind turbine foundation becomes a heat sink of the temperature control means.

This is advantageous in that the ground surrounding the wind turbine foundation has an enormous heat capacity and in that it is a relatively good conductor of heat, making it very suitable as the location of a heat sink of the temperature control means of a wind energy converter, in that the ground outside the foundation presents a very controlled environment, making it possible to dimension the temperature control system very exactly and ensuring that the heat sinks capacity is maintained throughout the entire life of the wind energy converter.

In an aspect of the invention, said heat sink comprises means for dissipating the bulk of said areas excess heat to said ground outside said foundation and/or said heat sink comprises means for absorbing the bulk of said areas needed heat from said ground outside said foundation.

By dissipating or absorbing the main part of the heat in the ground outside said foundation, it is possible to make a more cost-efficient temperature control system, in that the capacity of the heat sink of the temperature control means thereby becomes more constant and predictable, no matter the location on the globe or the time of day or year.

In an aspect of the invention, said temperature control means comprise one or more fluid conduits for guiding a cooling fluid in and/or between said one or more areas of said wind turbine and said ground outside said foundation.

Using fluid conduits for guiding the cooling fluid in and/or between the areas of the wind turbine and the heat sink running in the ground outside said foundation is advantageous, in that it provides for a simple and efficient way of moving the fluids.

In an aspect of the invention, said one or more fluid conduits are formed as one or more closed circuits making said cooling fluid circulate in said temperature control means.

It is complex and expensive to pump a cooling fluid from beneath ground level to a height of more than 50 meters. By making the cooling fluid circulate in a closed system the fluid on the way down will assist in pushing, the fluid on the way up, up. Hereby the pump substantially only have to overcome the flow resistance in the fluid conduits.

Furthermore, by making the fluid circuit closed, direct interaction with the surroundings can be avoided. This is advantageous in that it hereby is possible to avoid the introduction of unwanted foreign objects and other such as humidity, bugs, sand, dirt, salt and other to the inside of the wind turbine. It is hereby possible to obtain as much more controlled environment inside the wind turbine, hereby prolonging the life of the different wind turbine components and due to the controlled environment also enabling, that the life of the components can be predicted more exactly.

In an aspect of the invention, said ground outside said foundation comprise two or more separate fluid conduits of said temperature control means.

Fluid conduits placed in the ground outside the foundation can be very hard to access once installed and even though this underground position provides a high degree of protection against external wear and tear, no system can ever be completely failsafe. It is therefore advantageous to provide the part or the temperature control means running in the ground outside the foundation with at least two separate fluid conduits, in that it hereby is possible to provide the temperature control system with redundancy. E.g. if three individual fluid conduits in the ground of three individual closed circuits was enough to provided sufficient cooling or heating to the wind turbine, the ground could be provided with six individual fluid conduits of six individual closed circuits, hereby providing the part or the temperature control means running in the ground outside the foundation with a 100% overcapacity and thereby substantially eliminating the risk of the temperature control systems capacity being reduced to an unwanted level during the life of the wind turbine.

In an aspect of the invention, said one or more fluid conduits passes substantially the entire length of the interior of a wind turbine tower of said wind turbine.

By making the fluid conduits extend through the tower of the wind turbine, some of the heat transferred to or from the ground can be used for heating or cooling the tower or wind turbine components located in the tower. This is particularly advantageous if the temperature control means primarily is used for cooling the nacelle and/or components in the nacelle, in that some of the heat hereby will have been dissipated before the heat is transferred to the ground, hereby enabling that the size/capacity of the means for exchanging heat in the ground can be reduced.

In an aspect of the invention, said cooling fluid is a liquid such as an anti-freeze and water solution, methanol, propylene glycol or potassium acetate.

Liquids such as anti-freeze solution and other is relatively simple and inexpensive to move over large distances, it has a relatively high heat capacity and relatively good heat conducting qualities and it is therefore advantageous to use a liquid as cooling fluid in a temperature control system for a wind energy converter.

In an aspect of the invention, said ground outside said foundation is the ground immediately surrounding said foundation.

The ground immediately surrounding the foundation is usually dug up when establishing the foundation. By establishing the means for exchanging heat in this free space during the making or installing of the foundation it is possible to install the means for exchanging heat in a simple and inexpensive manner.

Furthermore, if the means for exchanging heat is placed close to the foundation the risk of the means for exchanging heat being damaged by ships trying to ride at anchor near the wind turbine, by soil tillage form agricultural machinery or other, by digging or other is reduced because the means for exchanging heat is somewhat protected by the foundation.

In an aspect of the invention, said means for exchanging heat extends substantially vertically into the ground beneath and/or around said wind turbine.

Usually, the deeper you dig into the earth the hotter it gets and even in arctic areas of the globe frost free depth is only a few meters down. By making the heat sink extend substantially vertically into the ground beneath and/or around the wind turbine foundation - e.g. in the form of one or more heat pipes - it is possible to predict the surrounding temperature more exactly, no matter where on the globe the wind energy converter is sited. This is advantageous in that it hereby is possible to dimension the capacity of the temperature control system more exactly hereby substantially eliminating the cost of over-dimensioned systems.

In an aspect of the invention, said means for exchanging heat extends substantially horizontally in the ground immediately around said foundation.

By making the heat sink extend substantially horizontally in the ground immediately around the wind turbine foundation it is possible to install the fluid conduits in a simple and inexpensive way in that the conduits can be dug into the ground by means of ordinary digging machinery or in case or offshore be put into trenches made by spraying.

In an aspect of the invention, said means for exchanging heat extends substantially horizontally in the ground immediately beneath said foundation.

Placing the means for exchanging heat in the ground immediately beneath the foundation is advantageous, in that the means for exchanging heat hereby is protected by the foundation and in that substantially no extra ground preparing work has to be done to facilitate the means for exchanging heat, in that typically a hole has to be dug anyway for accommodating the foundation.

In an aspect of the invention, said means for exchanging heat is positioned in one or more trenches in the ground outside said foundation.

By placing the means for exchanging heat in a trench e.g. running alongside the foundation it is possible to provide a very controlled environment for the means for exchanging heat. Furthermore, if the trenches are substantially waterproof the means for exchanging heat would be positioned in a substantially constantly moist environment hereby enabling that the heat transferring ability of the ground surrounding the means for exchanging heat would be increased, hereby increasing the capacity of the temperature control means.

In an aspect of the invention, said means for exchanging heat are positioned in a depth between the surface of said ground outside said foundation and the depth of said foundation.

If said means for exchanging heat are positioned in the surface of the ground the varying temperature of the surroundings will have too great influence on the capacity of the means for exchanging heat and if the means for exchanging heat is placed too deep in the ground the cost of installing the means for exchanging heat will be increased significantly and it is therefore advantageous that the means for exchanging heat are placed in the ground no deeper than the foundation.

In an aspect of the invention, said one or more areas of said wind turbine are a nacelle of said wind turbine and/or one or more wind turbine components situated in said nacelle such as a power convertor, a generator and/or a gearbox.

The nacelle and the components in the nacelle is traditionally cooled by the surrounding air either directly of through a heat exchanger, in that this is the obvious choice when considering how to cool components placed in a nacelle positioned at the end of a high tower extending e.g. 80 meters into the air. However, as previously mentioned there are certain disadvantages in air cooling and considering the placement of the nacelle it is therefore particularly inventive to control the temperature of the nacelle and/or components in the nacelle by means of temperature control means comprising means for exchanging heat positioned in the ground outside the foundation beneath the wind turbine tower.

In an aspect of the invention, said means for exchanging heat is positioned substantially only in the ground outside the foundation.

The inside of a wind turbine foundation can be very hard to access once installed - no matter if it is the foundation for a offshore or a land based wind turbine. It is therefore advantageous to place all the temperature control means and thereby also the means for exchanging heat, entirely external to the wind turbine foundation in that it hereby is access these means for exchanging heat.

Furthermore, if the means for exchanging heat where placed in or where passing through the inside of the foundation, heat would inevitably be dissipated in the foundation. Depending on the type of foundation the foundation can be very sensitive to local thermal expansion and by deposing heat locally in the foundation the risk of the foundation being damaged is increased or at least the risk of reducing the life of the foundation is increased. It is therefore advantageous to positioned the means for exchanging heat substantially only in the ground outside the foundation

Even further the invention provides for a method for controlling the temperature of one or more areas of a wind energy converter according to any of the above, where said heat is dissipated or absorbed in the ground outside a foundation of said wind turbine.

Hereby is achieved an advantageous embodiment of a method for controlling the temperature of one or more areas of a wind energy converter.

Even further the invention provides for use of a method according to any of the above for controlling the temperature of one or more areas of a wind energy converter according to any of the above wherein said wind energy converter is land based.

Using a method according to the invention for controlling the temperature of one or more areas of a land based wind energy converter is advantageous, in that such a method provides simple and cost-efficient means for controlling the temperature of one or more areas of the wind energy converter.

### Figures

The invention will be described in the following with reference to the figures in which
- fig. 1.: illustrates a large modern wind turbine known in the art, as seen from the front,
- fig. 2: illustrates a simplified embodiment of a traditional temperature control system for a wind turbine component,
- fig. 3: illustrates a cross section of an embodiment of a wind energy converter according to the invention, as seen from the front,
- fig. 4: illustrates a wind turbine foundation known in the art for a land based wind turbine, as seen from the front,
- fig. 5: illustrates a part of a cross section of an embodiment of fluid conduits running alongside a wind turbine foundation, as seen from the front,
- fig. 6: illustrates a part of a cross section of an embodiment of fluid conduits running in a trench alongside a wind turbine foundation, as seen from the front,
- fig. 7: illustrates a wind turbine foundation and a floor comprising fluid conduits, as seen from the top,
- fig. 8: illustrates a wind energy converter comprising fluid conduits in the ground surrounding the foundation, as seen from the top,
- fig. 9: illustrates a cross section of an offshore wind energy converter comprising a mono pile foundation and a substantially vertical heat sink, as seen from the front,
- fig. 10: illustrates a cross section of an offshore wind energy converter comprising a gravitation foundation and a substantially horizontal heat sink, as seen from the front,
- fig 11: illustrates a simplified wind energy converter comprising five separate cooling fluid circuits, as seen from the side,
- fig 12: illustrates a simplified wind energy converter comprising four separate fluid conduits extending into the ground, as seen from the side, and
- fig. 13: illustrates a cross section of an embodiment of a cooling fluid union.

### Detailed description

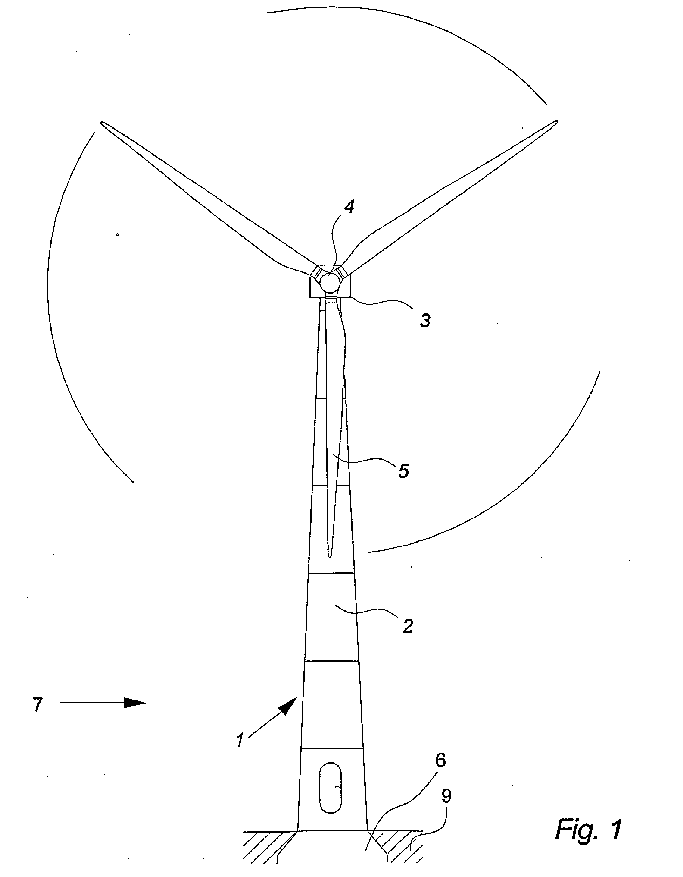

Fig. 1 illustrates a wind energy converter 7 comprising a modern wind turbine 1 placed on and rigidly connected to a wind turbine foundation 6. The wind turbine 1 comprises a tower 2 and a wind turbine nacelle 3 positioned on top of the tower 2. The wind turbine rotor 4, comprising three wind turbine blades 5, is connected to the nacelle 3 through the low speed shaft which extends out of the nacelle 3 front.

In this embodiment the foundation 6 is placed in the ground 9 more or less completely below the surface of the ground 9 and together the foundation 6 and the surrounding ground 9 fixates and carries the wind turbine 1 and hereby ensures that the wind turbine 1 stays in places both vertically and horizontally, even though a very large and heavy wind turbine 1 is greatly influenced by both gravity, wind loads and other.

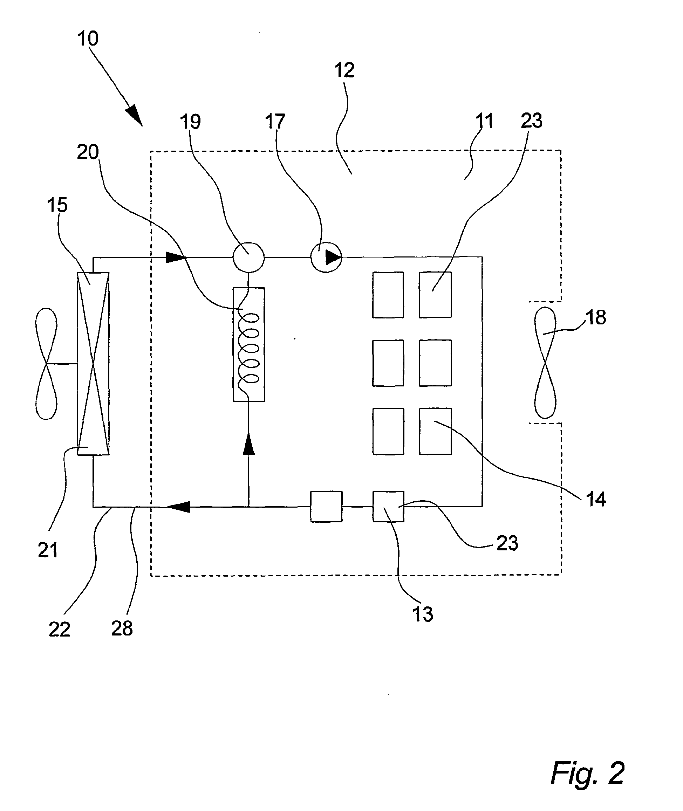

Fig. 2 illustrates an embodiment of traditional temperature control means 10 for controlling the temperature of one or more areas of a wind turbine 1, such as the nacelle 3 and/or wind turbine components 11 situated in the nacelle 3, in the tower or in or at other parts of the wind turbine 1 during normal operation of the wind turbine 1.

In this embodiment the wind turbine component 11 is a power converter 12 but in another embodiment the component could be a wind turbine gear, generator, bearings, hydraulic system, lubrication system, the entire or parts of the nacelle 3 or tower 2 or rotor 4 or any combination thereof.

In this embodiment the power converter 12 comprising different kind of power handling equipment such as power resistors 13, motherboards 14 and other. In this embodiment the motherboards 14 is air cooled, and the power resistors 13 is both air and fluid cooled.

A heat sink 21 of the temperature control means 10 - in form of a main radiator 15 with a fan - is mounted outside the power converter 12 in a location enabling heat exchange with the air outside the wind turbine 1. From the main radiator 15 a cooling fluid flows through a bidirectional valve 19 and through a pump 17 which creates the flow of the cooling fluid. From the pump 17 the cooling fluid flows through some of the equipment in the power converter 12. The heated cooling fluid then returns to the heat sink 21 to be cooled again.

In this embodiment the power converter 12 also contains equipment which only can or needs to be air cooled. The cabinet surrounding the power converter 12 is therefore provided with at least one cabinet fan 18 generating airflow of air from the nacelle 3 or of air from the outside of the wind turbine 1.

If the wind turbine 1 is placed in a cold environment and the weather is calm making the power production, and thereby most of the internal heat emission, stops, it can be necessary to heat the power handling equipment in the power converter 12. This can be done by activating the bidirectional valve 19 changing the direction of the cooling fluid flow and making it circulate inside the power converter 12 and pass a cooling fluid heater 20.

If the ambient temperature is high and the weather is windy, the equipment in the wind turbine 1 could produce so much heat, that the temperature rises above a certain level which makes some of the equipment shut down to protect them from being damaged by the high temperature. This will make most or the entire power production stop, and thereby also stop most of the internal heat production.

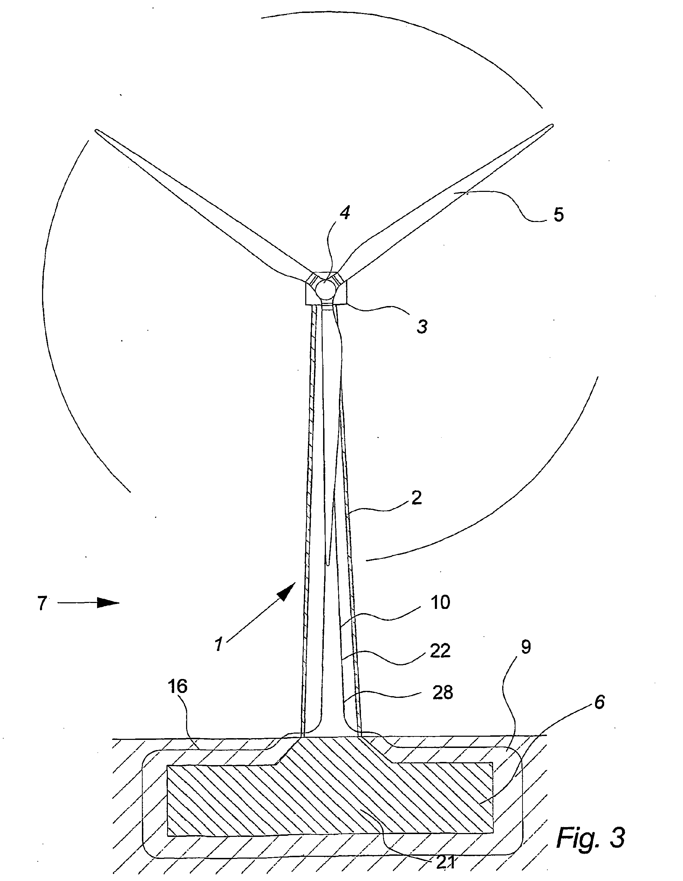

Fig. 3 illustrates a cross section of an embodiment of a wind energy converter 7 according to the invention comprising a foundation 6 acting as a heat sink 21 of the temperature control means 10, as seen from the front.

In this embodiment of the invention the wind energy converter 7 is land based and it comprises a wind turbine 1 placed on a wind turbine foundation 6. The foundation 6 is in this embodiment substantially made at the site of reinforced concrete, but in another embodiment the foundation 6 could be completely or partly prefabricated e.g. in the form of one or more metal or concrete shells or structures which e.g. could be filled at the site with a filler such as concrete, stones, sand or other.

In this embodiment the temperature control means 10 comprises a closed fluid conduit 22 running from the nacelle 3, down through the tower 2, into ground 9 surrounding the foundation 6 - to form means for exchanging heat 16 - before it returns to the nacelle 3. In fig. 3 the fluid conduit 22 is somewhat simplified and in another embodiment the fluid conduit would describe a more complex pattern before returning to the wind turbine.

In another embodiment of the invention the temperature control means 10 could also comprise an open flow of cooling fluids e.g. if the foundation 6 comprised a reservoir (not shown) whereto the cooling fluids where pumped e.g. from the nacelle and wherefrom the cooling fluids where pumped into the wind turbine, or if the cooling fluid was e.g. groundwater being pumped to the areas of the wind turbine needing heating or cooling, where after the groundwater was to be pumped back or disposed of in another way.

In the illustrated closed circuit 28 the cooling fluid is brine but in another embodiment of the invention the cooling fluid could be another kind of anti-freeze and water solution, such as water and isopropyl alcohol. The cooling fluid could also be any other kind anti-freeze solution, such as methanol, propylene glycol or potassium acetate or it could be ammoniac, CO2 and/or Freon gases.

In this embodiment of the invention the temperature control means 10 controls the temperatures of specific components 11 in the nacelle 3, but in another embodiment the temperature control means 10 could also or instead control the temperature of the entire nacelle 3 including the air inside the nacelle, it could control the temperature of components in the tower 2 and/or of the air in the tower, it could control the temperature of specific components 11 of the rotor 4 e.g. to maintain the blades 5 frost-free, it could control the temperature of wind turbine components 11 placed outside the wind turbine e.g. in a neighboring house (not shown) and/or the temperature inside said house or any combination hereof.

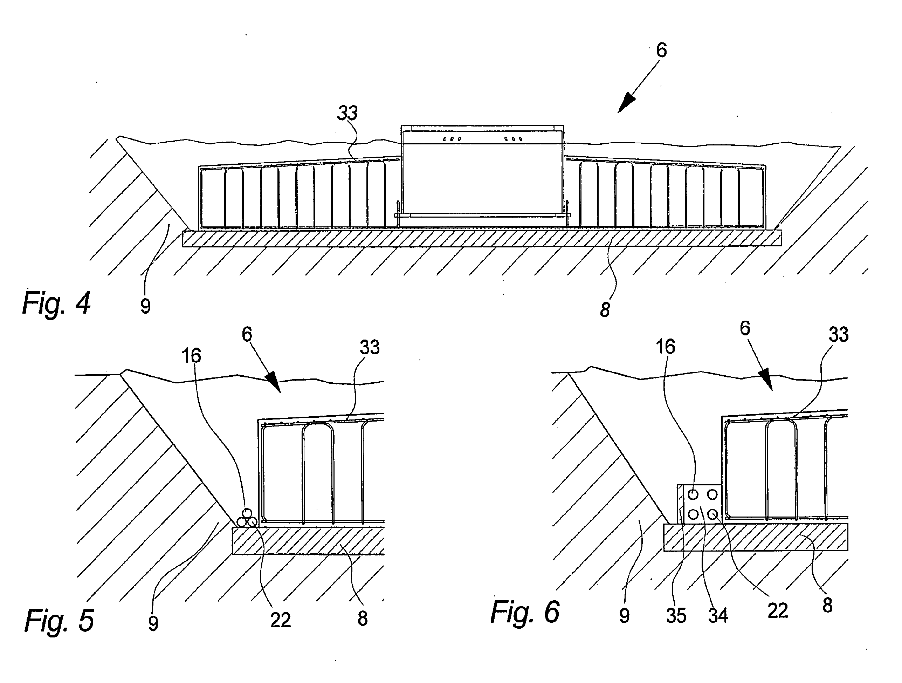

Fig. 4 illustrates cross section of a wind turbine foundation 6 known in the art for a land based wind turbine 1, as seen from the front.

This type of foundation 6 is typically made by digging a large hole in the ground and casting a floor 8 in the hole. Hereafter a formwork (not shown) is raised to substantially define the outer edges of the foundation 6. The foundation 6 is provided with a strengthening structure in the form of reinforcement 33 and a cylindrical metal centre part for connecting the foundation 6 to the wind turbine tower 2. In this embodiment the reinforcement is formed by metal rods or welded mesh metal reinforcement.

After establishing the strengthening structure concrete is poured into the "mould" and when the concrete has solidified the formwork is removed and the foundation 6 is covered with some of the dug up earth.

Fig. 5 illustrates a part of a cross section of an embodiment of fluid conduits 22 running alongside a wind turbine foundation 6, as seen from the front.

In this embodiment of the invention the means for exchanging heat 16 is formed as one pipe 22 circulating tree times the outside the perimeter of the foundation 6 before returning to the wind turbine 1. In another embodiment the foundation 6 could comprise several individual fluid conduits 22.

In this embodiment the pipe 22 is placed in the hole next to the foundation during or immediately after establishing the foundation 6 before the excavation is refilled and substantially the entire foundation 6 is covered by the ground 9.

In this embodiment the fluid conduits 22 are not fixed or guided but in another embodiment the fluid conduits 22 could be fixed e.g. to the floor 8, to the outside surface of the foundation 6 or to a number of separate retainers (not shown) substantially fixating the fluid conduits 22 position during the making of the foundation 6 and throughout the life of conduits 22.

Fig. 6 illustrates a part of a cross section of an embodiment of fluid conduits 22 running in a trench 34 alongside a wind turbine foundation 6, as seen from the front.

In this embodiment of the invention the floor 8 in the hole is provided with a substantially vertical wall 35 running substantially parallel with the outside edge of the foundation 6, hereby forming a trench 34. Inside this trench 34 means for exchanging heat 16 is provided in the form of a number of fluid conduits 22 of the temperature control means 10. The trench 34 is in this embodiment filled with a particle material in the form of sand before the hole is refilled. Whenever it rains water will run of the foundation and collect in the trench 34 ensuring that the environment immediately surrounding the means for exchanging heat 16 is substantially constantly moist.

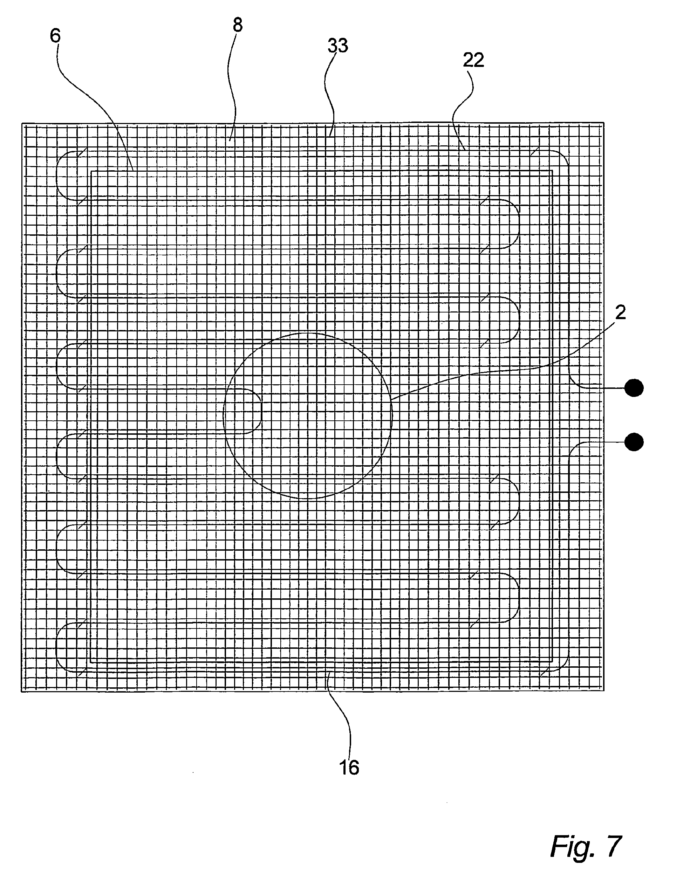

Fig. 7 illustrates a wind turbine foundation 6 and a floor 8 comprising fluid conduits 22, as seen from the top.

In this embodiment of the invention the floor 8 immediately beneath the foundation 6 comprise at least one hose 22 running inside the floor 8, in a way which ensures that e.g. the heat from the cooling fluid flowing through the hose, is dissipates over a large area as efficiently as possible or as needed. In this embodiment the hose 22 describes a kind of zigzag pattern but in another embodiment the fluid conduits 22 could be placed in another pattern such as spirals, circles, squares or other both in the horizontal and the vertical plane.

In this embodiment of the invention the fluid conduit 22 is a hose but in another embodiment the conduits 22 could be one or more pipes, tubes, channels, ducts or other embedded in the floor 8, running on the surface of the foundation 6 or other e.g. in combination. In an embodiment the fluid conduit 22 could further comprise fins, surface irregularities or other that could increase the surface of the fluid conduit 22 to improve its ability to dissipate or absorb heat.

In this embodiment the fluid conduits 22 is connected to a mesh reinforcement 33 in the floor 8, but in another embodiment the fluid conduits 22 could be integrated in the reinforcement or the fluid conduits 22 could run unguided in the floor 8.

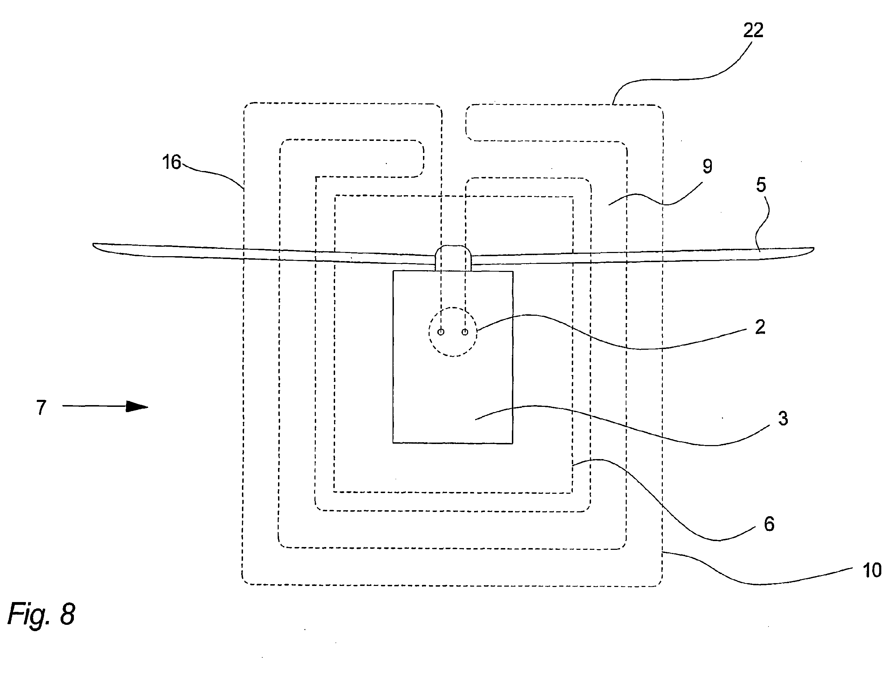

Fig. 8 illustrates a wind energy converter 7 comprising fluid conduits 22 in the surrounding ground 9, as seen from the top.

In this embodiment of the invention the fluid conduits 22 are distributed in the ground 9 surrounding the wind turbine foundation 6. The fluid conduits 22 could e.g. be dug a certain dept into the ground 9 - such as between a half and one meter down - or they could be placed in several layers of different depths.

In some parts of the globe such as in arctic areas it could be advantageous to provide the temperature control means 10 with at least two separate closed circuits 28 of cooling fluid - one placed close to the surface of the ground 9 and on placed deep into the ground 9. The circuit 28 placed close to the surface could then be used to dissipate excess heat from the cooling fluid, whereas the circuit 28 placed deeper could be used to heat the cooling fluid e.g. to heat the components 11 before or at startup or if it was so extremely cold, that the operating temperature of one or more wind turbine components 11 was beneath a certain level. In these particular circumstances the temperature of the cooling fluid could also be raised by means of a reverse cycle heating system such as a heat pump.

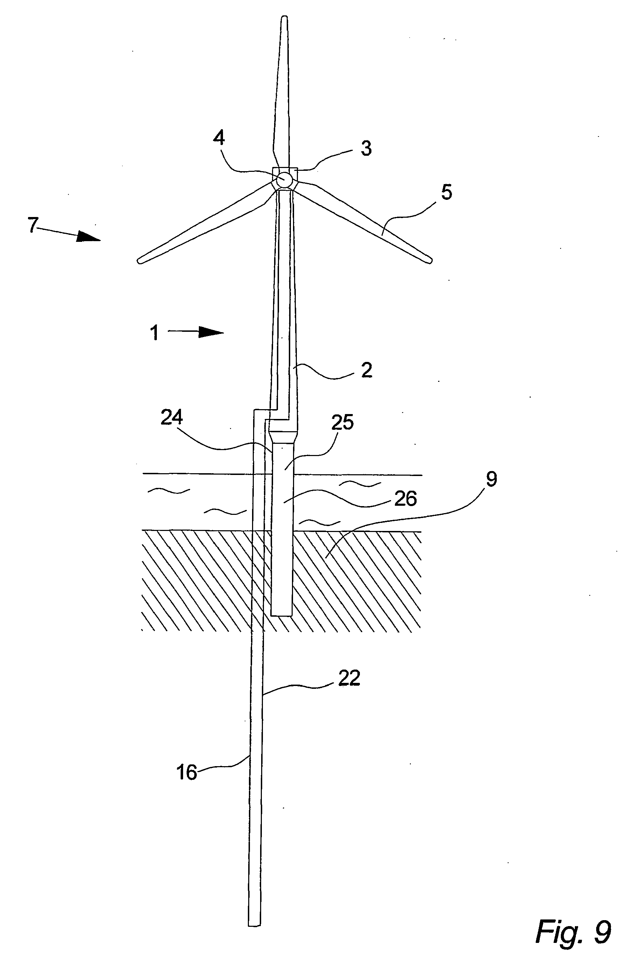

Fig. 9 illustrates a cross section of an offshore wind energy converter 7 comprising a mono pile foundation 25 and a substantially vertical heat sink 21, as seen from the front.

In this embodiment of the invention the wind energy converter 7 comprise a wind turbine 1 placed on a plinth 24 of a mono pile foundation 25.

A mono pile foundation 25 comprises a pile 26 such as a steel pile 26, most often with a diameter of between 3.5 and 4.5 metres. The pile 26 is driven into the seabed to a certain depth. How deep the pile 26 is placed among other things depends on the type of underground but typically it is between 10 and 20 meters.

In this embodiment of the invention the wind energy converter 11 is provided temperature control means 10 comprising fluid conduits 22 running substantially vertically into the ground 9 immediately beside the wind turbine foundation 6, making the ground 9 underneath the wind turbine 1 act as a substantially vertical heat sink 21 of the temperature control means 10.

In another embodiment the vertical extend of the fluid conduits 22 could be limited to the vertical length of the foundation 25, the fluid conduits 22 could extend vertically and/or horizontally in the seabed 9 outside the foundation 25 or the fluid conduits 22 could run on the outside surface of the pile 26.

In another embodiment of the invention the vertical heat sink 21 could also be formed as one or more heat-pipes (not shown). In their simplest forms heat-pipes comprise a sealed vessel containing a working fluid and its vapour, together with a capillary wick lining system. A heat-pipe is basically a very efficient super heat conductor, which provides a thermal absorption and transfer system with the capability to move large amounts of power in the form of heat energy.

The application of heat at any point on the heat-pipe surface causes a liquid / vapour phase change inside, which enables heat energy to be transmitted in the vapour phase with only a minimal temperature gradient. In terms of thermal conductivity, a heat-pipe can exhibit a thermal performance which can exceed that of an equivalent sized component made from pure copper by over 1000 times.

Typically, heat-pipes are produced in rod form with a circular cross section but other shapes are also possible such as other cross sections or flattened section heat-pipes.

Heat-pipes could e.g. advantageously be used if the underground where rocks or the like, or they could be used in combination with a horizontal heat sinks 21 or other e.g. in connection with piles used for piling or other.

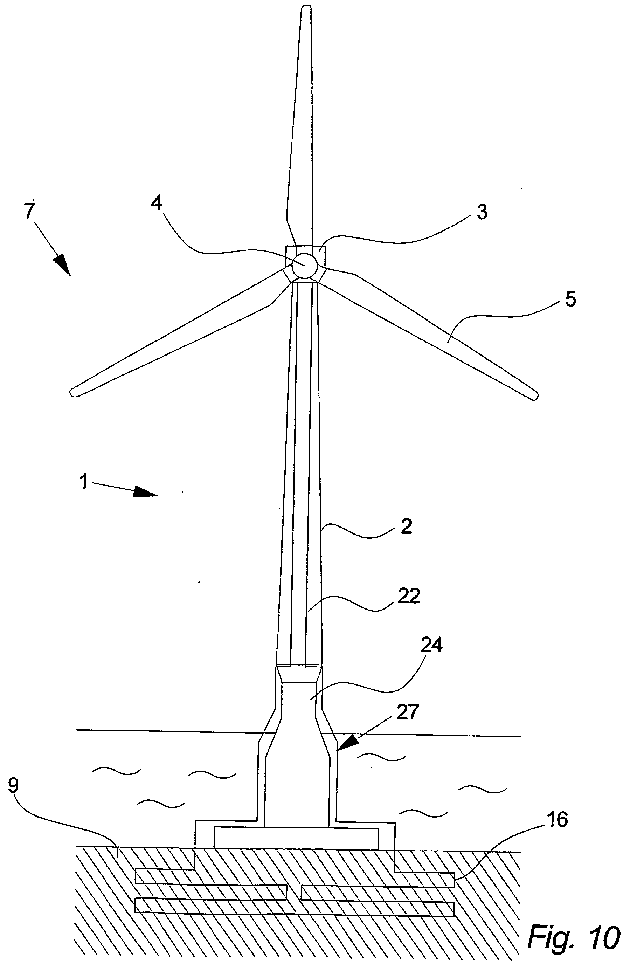

Fig. 10 illustrates a cross section of an offshore wind energy converter 7 comprising a gravitation foundation 27 and a substantially horizontal heat sink 21, as seen from the front.

Most of the existing offshore wind energy converters 7 use gravitation foundations 27 and the illustrated gravitation foundation 27 is made of reinforced concrete but in another embodiment it could also be made of a cylindrical steel tube placed on a flat steel box on the seabed.

Usually a steel gravity foundation 27 is considerably lighter than concrete foundations 27 and although the finished foundation has to have a weight of e.g. more than 1,000 tonnes, the steel structure can be made relatively light enabling that a steel gravity foundation 27 can be transported and installed by use of a barges relatively rapidly, using the same fairly lightweight crane used for the erection of the wind turbine 1.

The gravity foundation 27 is filled with olivine (a very dense mineral), stones, sand, gravel, concrete or any combination hereof which gives the foundations sufficient weight to withstand storm, waves, ice pressure and other.

In this embodiment of the invention fluid conduits 22 are guided outside the gravity foundation 27 and laid out substantially horizontally in the seabed surrounding the foundation 6 to make the surrounding ground 9 form a heat sink 21 of the temperature control means 10.

Fig. 3 to 10 illustrates different embodiments of the invention in relation to specific embodiments of land based or offshore foundation 6, but the invention could also be used in connection with other types of foundations 6, such as tripod foundations (not shown), pier foundations (not shown) or other.

Tripod foundations (not shown) are used with offshore wind turbines 1 and they typically comprise a steel pile below the turbine tower from which a steel frame emanates which transfers the forces from the tower into three steel piles. The three piles are driven 10 to 20 metres into the seabed depending on soil conditions and ice loads. The advantage of the three-legged model is that it is suitable for larger water depths and at the same time only a minimum of preparations are required at the site before installation.

Pier foundations (not shown) are used in relation with land based wind turbines 1 and are typically formed as of a inner and an outer corrugated metal pipe wherein between a number of bolt are concreted and to which the wind turbine tower 2 is attached.

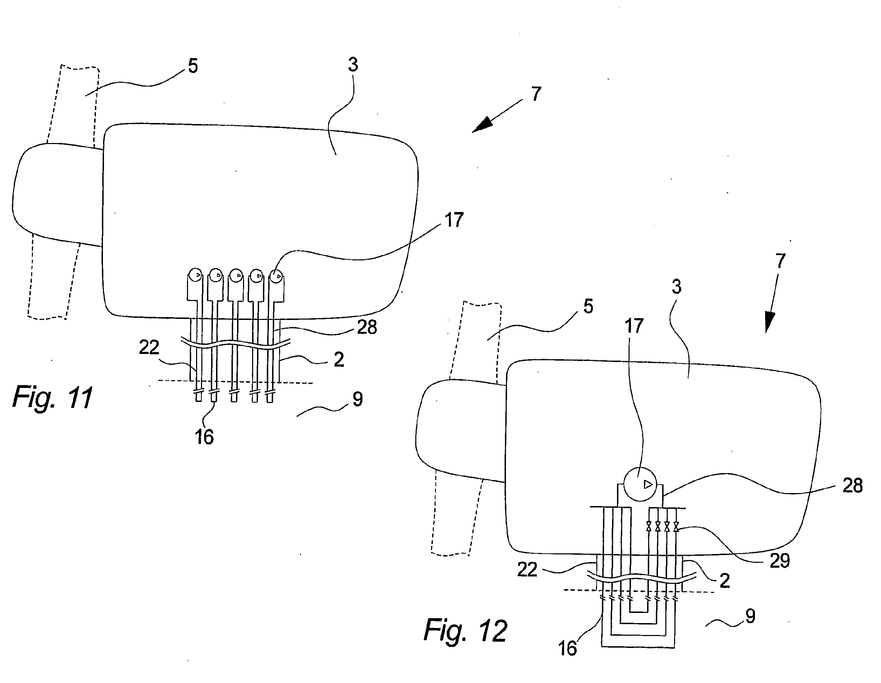

Fig. 11 illustrates a simplified wind energy converter 7 comprising five separate cooling fluid circuits 28.

In this embodiment of the invention the wind energy converters 7 temperature control means 10 comprise five individual and separate closed circuits 28 of cooling fluid but in another embodiment the temperature control means 10 could comprise another number of circuits 28 such as two, three, four, six, seven or more.

Each circuit 28 comprise a fluid pump 17 located in the nacelle 3 for creating circulation of the fluid in the fluid conduit 22. In another embodiment the pumps 17 could be placed elsewhere such as in the tower 2, outside the wind turbine e.g. in a neighbouring house or even in the foundation 6.

In this embodiment the fluid conduits 22 extends from the nacelle 3, down through the tower 2, into the ground 9 to provide means for exchanging heat hereby making the ground 8 act as a heat sink 21 of the temperature control means 10 and then it returns to the nacelle 3.

In this embodiment the cooling fluid circulating in the fluid conduits 22 will also flow through or pass the components 11 in the nacelle 3 needing heating or cooling or e.g. through the blades 5 to deice these. This could e.g. be done by mounting a temperature or remote controlled mixing valve at each component 11 to ensure optimal operating temperature and/or reduce or eliminate thermal fluctuations.

In the nacelle 3, in the tower 2 and/or elsewhere the cooling fluid could also pass a large cooling fluid to air heat exchanger (not shown). This or these heat exchangers could be used to control the temperature of the air in the nacelle 3, in the tower 2 and/or elsewhere, thereby making it possible to eliminate substantially all open interaction with the surroundings e.g. in the nacelle 3, enabling that the nacelle 3 can be completely closed, making the environment in the nacelle 3 very controlled.

In some embodiments of wind energy converters 7 heat producing or needing components 11 are also placed inside the tower 2 and in such a case the cooling fluid would also pass these components 11 or even by means of cooling fluid to air heat exchangers create a controlled environment inside the tower 2.

In another embodiment the fluid conduits 22 could also extend outside the tower 2 e.g. to cool or heat wind turbine components 11 placed in a neighbouring house (not shown).

Fig. 12 illustrates a simplified wind energy converter 7 comprising four separate fluid conduits 22 extending into the ground 9.

In this embodiment of the invention one large pump 17 is creating a flow of cooling fluids in four separate and individual fluid conduits 22 running through the tower 2, the ground 9 surrounding the foundation 6 and back again. Each of the fluid conduits 22 comprises a valve 29 which could be an on/off valve 29 to control the flow through the specific conduits 22. In this embodiment it is therefore possible to control the speed of the flow of cooling fluid by opening or shutting more or less fluid conduits 22.

In this embodiment the temperature control means 10 further comprise a cooling fluid to air heat exchanger in the nacelle 3 to enable that the nacelle can be substantially sealed of from the surroundings, but in another embodiment the temperature control means 10 could further comprise a traditional cooling system heat exchanging with the surrounding air as described in fig. 2. This traditional cooling system could control the air temperature in the nacelle or it could be used to control the temperature of specific components 11.

The temperature control means 10 illustrated in fig. 3 to 12 are all configured to transport the bulk of the heat produced or needed in the different areas 23 of the wind turbine 1 to be dissipated or absorbed in the ground 9, but e.g. if the temperature control means 10 further comprise a traditional cooling system for heat exchanging with the surrounding air it could be only a fraction to the heat produced or needed that was exchanged with the ground 9.

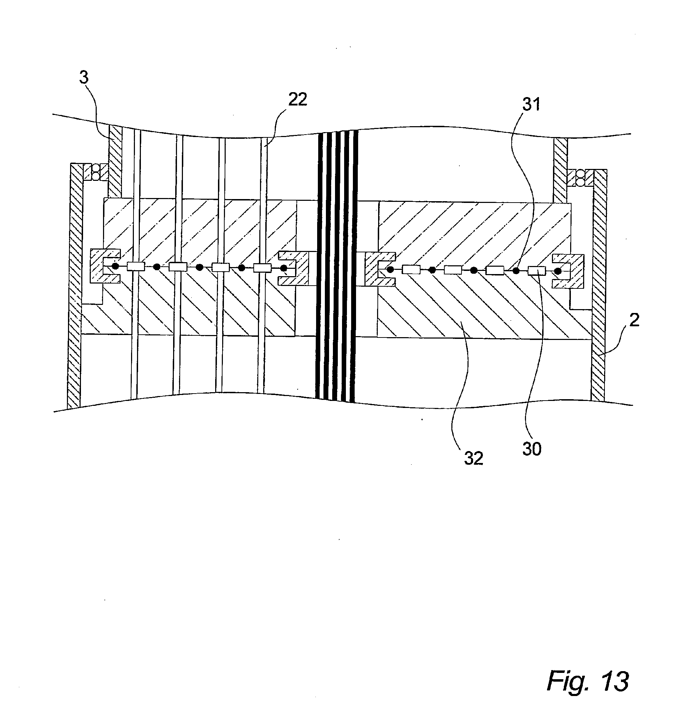

Fig. 13 illustrates a cross section of an embodiment of a cooling fluid union 32.

In this embodiment of the invention the wind turbine 1 is provided with a union 32 for guiding the cooling fluid between the tower 2 and the nacelle 3. In traditional wind turbines 1 the nacelle 3 is able to rotate in relation to the tower 2 to ensure that the rotor 4 always faces the wind.

To enable the cooling fluid to pass this rotating joint, the joint is provided with a union 32 comprising an upper part connected to the nacelle 3 and a lower part connected to the tower 2. The union is provided with a number of annular passageways 30 between the two part and the passageways 30 are separated by a form of sealing 31 e.g. in the form of O-rings. The fluid conduits 22 are through both the upper part and the lower part connected to the passageways 30 enabling that the fluid can pass the rotating joint without the fluid in the different fluid conduits being mixed.

In this embodiment of the invention the centre of the union 32 is hollow enabling that power cables and other can be guided through the union 32.

Usually the nacelle 3 only rotates a limited number of times in one direction before it is forced to rotate in the opposite direction. In another embodiment of the invention it is therefore also feasible that the fluid conduits 22 are lead from the nacelle 3 to the tower 2 and back by means of flexible hoses or the like hanging more or less freely from the nacelle 3 down into the tower 2 like power cables does in many wind turbines 1.

The invention has been exemplified above with reference to specific examples of temperature control means 10, wind energy converters 7, foundations 6, heat sinks 21 and other. However, it should be understood that the invention is not limited to the particular examples described above but may be designed and altered in a multitude of varieties within the scope of the invention as specified in the claims.

### List

- 1.: Wind turbine
- 2.: Tower
- 3.: Nacelle
- 4.: Rotor
- 5.: Blade
- 6.: Foundation
- 7.: Wind energy converter
- 8.: Floor
- 9.: Ground outside the wind turbine foundation
- 10.: Temperature control means
- 11.: Wind turbine components
- 12.: Power converter
- 13.: Power resistor
- 14.: Motherboard
- 15.: Main radiator
- 16.: Means for exchanging heat
- 17.: Pump
- 18.: Cabinet fan driven air inlet
- 19.: Bidirectional valve
- 20.: Cooling fluid heater
- 21.: Heat sink
- 22.: Fluid conduit
- 23.: Area of the wind turbine needing heating or cooling
- 24.: Plinth
- 25.: Mono pile foundation
- 26.: Pile
- 27.: Gravitation foundation
- 28.: Cooling fluid circuit
- 29.: Valve
- 30.: Annular passageway
- 31.: Sealing
- 32.: Union
- 33.: Reinforcement
- 34.: Trench
- 35.: Wall

## Claims

1. A wind energy converter (7) comprising
a wind turbine (1),
a wind turbine foundation (6), and
temperature control means (10) for controlling the temperature of one or more areas (23) of said wind turbine (1), said temperature control means (10) including means for exchanging heat (16)
**characterized in that**
said means for exchanging heat (16) is positioned in the ground (9) outside said foundation (6).

2. A wind energy converter (7) according to claim 1, wherein said temperature control means (10) comprising a cooling fluid for transporting heat to or from said one or more areas (23) of said wind turbine (1), one or more pumps (17) for creating a flow of said cooling fluid and one or more heat sinks (21) for giving off heat from or supplying heat to said cooling fluid.

3. A wind energy converter (7) according to claim 1 or 2, wherein said means for exchanging heat (16) is a heat sink (21) of said temperature control means (10).

4. A wind energy converter (7) according to claim 2 or 3, wherein said heat sink (21) comprises means for dissipating the bulk of said areas (23) excess heat to said ground (9) outside said foundation (6) and/or said heat sink (21) comprises means for absorbing the bulk of said areas (23) needed heat from said ground (9) outside said foundation (6).

5. A wind energy converter (7) according to any of the preceding claims, wherein said temperature control means (10) comprise one or more fluid conduits (22) for guiding a cooling fluid in and/or between said one or more areas (23) of said wind turbine (1) and said ground (9) outside said foundation (6).

6. A wind energy converter (7) according to claim 5, wherein said one or more fluid conduits (22) are formed as one or more closed circuits (28) making said cooling fluid circulate in said temperature control means (10).

7. A wind energy converter (7) according to claim 5 or 6, wherein said ground (9) outside said foundation (6) comprise two or more separate fluid conduits (22) of said temperature control means (10).

8. A wind energy converter (7) according to any of claims 5 to 7, wherein said one or more fluid conduits (22) passes substantially the entire length of the interior of a wind turbine tower (2) of said wind turbine (1).

9. A wind energy converter (7) according to any of claims 2, 5 or 6, wherein said cooling fluid is a liquid such as an anti-freeze and water solution, methanol, propylene glycol or potassium acetate.

10. A wind energy converter (7) according to any of the preceding claims, wherein said ground (9) outside said foundation (6) is the ground immediately surrounding said foundation (6).

11. A wind energy converter (7) according to any of the preceding claims, wherein said means for exchanging heat (16) extends substantially vertically into the ground (9) beneath and/or around said wind turbine (1).

12. A wind energy converter (7) according to any of the preceding claims, wherein said means for exchanging heat (16) extends substantially horizontally in the ground (9) immediately around said foundation (6).

13. A wind energy converter (7) according to any of the preceding claims, wherein said means for exchanging heat (16) extends substantially horizontally in the ground (9) immediately beneath said foundation (6).

14. A wind energy converter (7) according to any of the preceding claims, wherein said means for exchanging heat (16) is positioned in one or more trenches (34) in the ground (9) outside said foundation (6).

15. A wind energy converter (7) according to any of the preceding claims, wherein said means for exchanging heat (16) are positioned in a depth between the surface of said ground (9) outside said foundation (6) and the depth of said foundation (6).

16. A wind energy converter (7) according to any of the preceding claims, wherein said one or more areas (23) of said wind turbine (1) are a nacelle (3) of said wind turbine (1) and/or one or more wind turbine components (11) situated in said nacelle (3) such as a power convertor, a generator and/or a gearbox.

17. A method for controlling the temperature of one or more areas (23) of a wind energy converter (7) according to any of claims 1 to 16, where said heat is dissipated or absorbed in the ground (9) outside a foundation (6) of said wind turbine (1).

18. Use of a method according to claims 17 for controlling the temperature of one or more areas (23) of a wind energy converter (7) according to any of claims 1 to 16 wherein said wind energy converter (7) is land based.

## Patentansprüche

1. Windenergiewandler (7), welcher Folgendes umfasst:
eine Windturbine (1),
ein Windturbinenfundament (6), und
ein Temperatursteuermittel (10) zum Steuern der Temperatur von einem oder mehreren Bereichen (23) der Windturbine (1), wobei das Temperatursteuermittel (10) ein Mittel zum Austauschen von Wärme (16) beinhaltet,
**dadurch gekennzeichnet, dass**
das Mittel zum Austauschen von Wärme (16) im Boden (9) außerhalb des Fundamentes (6) positioniert ist.

2. Windenergiewandler (7) nach Anspruch 1, wobei das Temperatursteuermittel (10) ein Kühlfluid zum Transportieren von Wärme zu dem einen oder den mehreren Bereichen (23) der Windturbine (1) hin oder davon weg, eine oder mehrere Pumpen (17) zum Erzeugen eines Flusses des Kühlfluides und eine oder mehrere Wärmesenken (21) zum Abgeben von Wärme von dem oder Bereitstellen von Wärme an das Kühlfluid umfasst.

3. Windenergiewandler (7) nach Anspruch 1 oder 2, wobei das Mittel zum Austauschen von Wärme (16) eine Wärmesenke (21) des Temperatursteuermittels (10) ist.

4. Windenergiewandler (7) nach Anspruch 2 oder 3, wobei die Wärmesenke (21) ein Mittel zum Ableiten der Masse der Überschusswärme der Bereiche (23) in den Boden (9) außerhalb des Fundamentes (6) umfasst und/oder die Wärmesenke (21) ein Mittel zum Absorbieren der Masse der benötigten Wärme der Bereiche (23) aus dem Boden (9) außerhalb des Fundamentes (6) umfasst.

5. Windenergiewandler (7) nach einem der vorhergehenden Ansprüche, wobei das Temperatursteuermittel (10) einen oder mehrere Fluidkanäle (22) zum Führen eines Kühlfluides in und/oder zwischen dem einen oder den mehreren Bereichen (23) der Windturbine (1) und dem Boden (9) außerhalb des Fundamentes (6) umfasst.

6. Windenergiewandler (7) nach Anspruch 5, wobei der eine oder die mehreren Fluidkanäle (22) als ein oder mehrere geschlossene Kreise (28) ausgebildet sind, durch welche das Kühlfluid in dem Temperatursteuermittel (10) zirkuliert.

7. Windenergiewandler (7) nach Anspruch 5 oder 6, wobei der Boden (9) außerhalb des Fundamentes (6) zwei oder mehr separate Fluidkanäle (22) des Temperatursteuermittels (10) umfasst.

8. Windenergiewandler (7) nach einem der Ansprüche 5 bis 7, wobei der eine oder die mehreren Fluidkanäle (22) im Wesentlichen die gesamte Länge des Inneren eines Windturbinenturmes (2) der Windturbine (1) passieren.

9. Windenergiewandler (7) nach einem der Ansprüche 2, 5 oder 6, wobei das Kühlfluid eine Flüssigkeit wie eine Frostschutzmittel- und Wasser-Lösung, Methanol, Propylenglykol oder Kaliumacetat ist.

10. Windenergiewandler (7) nach einem der vorhergehenden Ansprüche, wobei der Boden (9) außerhalb des Fundamentes (6) der Boden ist, welcher das Fundament (6) unmittelbar umgibt.

11. Windenergiewandler (7) nach einem der vorhergehenden Ansprüche, wobei sich das Mittel zum Austauschen von Wärme (16) im Wesentlichen vertikal in den Boden (9) unterhalb der und/oder um die Windturbine (1) herum erstreckt.

12. Windenergiewandler (7) nach einem der vorhergehenden Ansprüche, wobei sich das Mittel zum Austauschen von Wärme (16) im Wesentlichen horizontal in den Boden (9) unmittelbar um das Fundament (6) herum erstreckt.

13. Windenergiewandler (7) nach einem der vorhergehenden Ansprüche, wobei sich das Mittel zum Austauschen von Wärme (16) im Wesentlichen horizontal in den Boden (9) unmittelbar unterhalb des Fundamentes (6) erstreckt.

14. Windenergiewandler (7) nach einem der vorhergehenden Ansprüche, wobei das Mittel zum Austauschen von Wärme (16) in einem oder mehreren Gräben (34) im Boden (9) außerhalb des Fundamentes (6) positioniert ist.

15. Windenergiewandler (7) nach einem der vorhergehenden Ansprüche, wobei das Mittel zum Austauschen von Wärme (16) in einer Tiefe zwischen der Oberfläche des Bodens (9) außerhalb des Fundamentes (6) und der Tiefe des Fundamentes (6) positioniert ist.

16. Windenergiewandler (7) nach einem der vorhergehenden Ansprüche, wobei der eine oder die mehreren Bereiche (23) der Windturbine (1) eine Gondel (3) der Windturbine (1) und/oder eine oder mehrere Windturbinenkomponenten (11), welche in der Gondel (3) positioniert sind, wie ein Stromwandler, ein Generator und/oder ein Getriebe, sind.

17. Verfahren zum Steuern der Temperatur des einen oder der mehreren Bereiche (23) eines Windenergiewandlers (7) nach einem der Ansprüche 1 bis 16, wobei die Wärme in den Boden (9) außerhalb eines Fundamentes (6) der Windturbine (1) abgeleitet oder daraus absorbiert wird.

18. Verwendung eines Verfahrens nach Anspruch 17 zum Steuern der Temperatur von einem oder mehreren Bereichen (23) eines Windenergiewandlers (7) nach einem der Ansprüche 1 bis 16, wobei der Windenergiewandler (7) landgestützt ist.

## Revendications

1. Convertisseur d'énergie éolienne (7) comprenant
une éolienne (1),
une base d'éolienne (6), et
un moyen de commande de température (10) pour commander la température d'une ou plusieurs zones (23) de ladite éolienne (1), ledit moyen de commande de température (10) incluant un moyen pour échanger de la chaleur (16)
**caractérisé en ce que**
ledit moyen pour échanger de la chaleur (16) est positionné dans le sol (9) à l'extérieur de ladite base (6).

2. Convertisseur d'énergie éolienne (7) selon la revendication 1, dans lequel ledit moyen de commande de température (10) comprend un fluide de refroidissement pour transporter la chaleur vers ou en provenance desdites une ou plusieurs zones (23) de ladite éolienne (1), une ou plusieurs pompes (17) pour créer un flux dudit fluide de refroidissement et un ou plusieurs puits de chaleur (21) pour dégager la chaleur dudit fluide de refroidissement ou pour lui fournir de la chaleur.

3. Convertisseur d'énergie éolienne (7) selon la revendication 1 ou 2, dans lequel ledit moyen pour échanger de la chaleur (16) est un puits de chaleur (21) dudit moyen de commande de température (10).

4. Convertisseur d'énergie éolienne (7) selon la revendication 2 ou 3, dans lequel ledit puits de chaleur (21) comprend un moyen pour dissiper la plus grande partie de la chaleur en excès desdites zones (23) dans ledit sol (9) à l'extérieur de ladite base (6) et/ou ledit puits de chaleur (21) comprend un moyen pour absorber la plus grande partie de la chaleur nécessitée par lesdites zones (23) à partir dudit sol (9) à l'extérieur de ladite base (6).

5. Convertisseur d'énergie éolienne (7) selon l'une quelconque des revendications précédentes, dans lequel ledit moyen de commande de température (10) comprend un ou plusieurs conduits de fluide (22) pour guider un fluide de refroidissement dans et/ou entre ladite une ou plusieurs zones (23) de ladite éolienne (1) et ledit sol (9) à l'extérieur de ladite base (6).

6. Convertisseur d'énergie éolienne (7) selon la revendication 5, dans lequel lesdits un ou plusieurs conduits de fluide (22) sont formés comme un ou plusieurs circuits fermés (28) faisant circuler ledit fluide de refroidissement dans ledit moyen de commande de température (10).

7. Convertisseur d'énergie éolienne (7) selon la revendication 5 ou 6, dans lequel ledit sol (9) à l'extérieur de ladite base (6) comprend deux ou plusieurs conduits de fluide distincts (22) dudit moyen de commande de température (10).

8. Convertisseur d'énergie éolienne (7) selon l'une quelconque des revendications 5 à 7, dans lequel lesdits un ou plusieurs conduits de fluide (22) passent sensiblement sur la longueur totale de l'intérieur d'un mât d'éolienne (2) de ladite éolienne (1).

9. Convertisseur d'énergie éolienne (7) selon l'une quelconque des revendications 2, 5 ou 6, dans lequel ledit fluide de refroidissement est un liquide comme un antigel et une solution d'eau, du méthanol, du propylène glycol ou de l'acétate de potassium.

10. Convertisseur d'énergie éolienne (7) selon l'une quelconque des revendications précédentes, dans lequel ledit sol (9) à l'extérieur de ladite base (6) est le sol entourant immédiatement ladite base (6).

11. Convertisseur d'énergie éolienne (7) selon l'une quelconque des revendications précédentes, dans lequel ledit moyen pour échanger de la chaleur (16) s'étend sensiblement verticalement dans ledit sol (9) au-dessous et/ou autour de ladite éolienne (1).

12. Convertisseur d'énergie éolienne (7) selon l'une quelconque des revendications précédentes, dans lequel ledit moyen pour échanger de la chaleur (16) s'étend sensiblement horizontalement dans le sol (9) immédiatement autour de ladite base (6).

13. Convertisseur d'énergie éolienne (7) selon l'une quelconque des revendications précédentes, dans lequel ledit moyen pour échanger de la chaleur (16) s'étend sensiblement horizontalement dans le sol (9) immédiatement au-dessous de ladite base (6).

14. Convertisseur d'énergie éolienne (7) selon l'une quelconque des revendications précédentes, dans lequel ledit moyen pour échanger de la chaleur (16) est positionné dans une ou plusieurs tranchées (34) dans le sol (9) à l'extérieur de ladite base (6).

15. Convertisseur d'énergie éolienne (7) selon l'une quelconque des revendications précédentes, dans lequel ledit moyen pour échanger de la chaleur (16) est positionné à une certaine profondeur entre la surface dudit sol (9) à l'extérieur de ladite base (6) et la profondeur de ladite base (6).

16. Convertisseur d'énergie éolienne (7) selon l'une quelconque des revendications précédentes, dans lequel lesdites une ou plusieurs zones (23) de ladite éolienne (1) sont une nacelle (3) de ladite éolienne (1) et/ou un ou plusieurs composants d'éolienne (11) situés dans ladite nacelle (3) comme un convertisseur de courant, un générateur et/ou une boîte de vitesses.

17. Procédé pour commander la température d'une ou plusieurs zones (23) d'un convertisseur d'énergie éolienne (7) selon l'une quelconque des revendications 1 à 16, où ladite chaleur est dissipée ou absorbée dans le sol (9) à l'extérieur d'une base (6) de ladite éolienne (1).

18. Utilisation d'un procédé selon la revendication 17 pour commander la température d'une ou plusieurs zones (23) d'un convertisseur d'énergie éolienne (7) selon l'une quelconque des revendications 1 à 16 dans lequel ledit convertisseur d'énergie éolienne (7) est basé sur la terre.
